# EUROPEAN PATENT APPLICATION

(11) **EP 3 185 192 A1**
(43) Date of publication of application: **28.06.2017**
(21) Application number: 16203378.1
(22) Date of filing: 12.12.2016
(51) Int. Cl.: G06Q 10/08, G06Q 50/28

(54) **FAST DEVICE REPLACEMENT SYSTEM**

(30) Priority: 21.12.2015 US 201514976116
(71) Applicant: Schneider Electric USA, Inc., Andover, MA 01810 (US)
(72) Inventor: JEFFERIES, Kevin M., Raleigh, NC 27606-2623 (US); EDWARDS, Benjamin W., Rolesville, NC 27571-9525 (US); WHITE, Matthew L., Raleigh, NC 27606 (US); FREEMAN, Alan, Raleigh, NC 27601 (US); WEILER, Richard Karl, Wake Forest, NC 27587-6299 (US)
(74) Representative: Zerbi, Guido Maria

(57) **Abstract**

A system and method for fast device replacement (FDR), where direct replacement of an electronic and/or control device is required with minimum downtime. The electronic or control device to be replaced includes a near field communication (NFC) reader/writer and is located at a specific physical location within the equipment. The system also includes a NFC tag placed at the same specific physical location as the electronic/control device to be replaced. The NFC tag file containing a data parameter set of the electronic/control device most recently associated with the specific physical location. The direct replacement electronic/control device also having a NFC reader/writer and an algorithm for obtaining the NFC tag data parameter set and determining whether to use the data parameter set from the most recent electronic/control device associated with the specific physical location or the local data set of the new direct replacement device.

## Description

### FIELD OF THE INVENTION

The invention is generally related to the replacement of industrial control devices and particularly to rapid replacement of a control device to minimize system down time and device setup time.

### BACKGROUND OF THE INVENTION

In the past, replacement of an industrial control device has required that the system be shut down for some period of time while the old device is physically removed from its location and the new device is physically installed and configured to operate in the same manner as the replaced device. The configuration can take place before installation, after installation or a combination of both. In any case this can result in a significant amount of nonproductive down time for the system, particularly if the replacement device requires manual configuration. When using a control system connected over a network, after the new device is physically installed and connected to the network it must be enabled, and then settings can be synchronized. Before it can be enabled it must have some method of pre-identifying its network address in the system. Some devices have a dedicated memory module for recording their settings, stored data and operating parameters. When replacement is required the memory module must be removed from the old device and then installed in the new device. Depending on the location and type of memory module this transfer may need to be done before physically installing the new device. Upon startup some additional steps can be required to actually transfer the stored information from the memory module to the new control device. In many processes even a short downtime can be critical to the process being controlled or the equipment used in the process. Therefore, a fast method of replacing a specific control device with an identical control device at the same location, which requires minimal system downtime would be desirable.

### SUMMARY OF THE INVENTION

The general idea of Fast Device Replacement (FDR) is to minimize downtime. There are many contributors to downtime; an important one is the transfer of settings and configuration parameters to a new replacement device. The present invention provides a system and method for direct replacement and configuration of a control device with minimal downtime.

The system of the present invention for fast device replacement comprises:
a control device having a near field communication (NFC) reader/writer;
a support structure for supporting the control device at a specific physical location on the support structure;
a NFC tag attached to the support structure or immediately adjacent the support structure at or immediately adjacent the specific physical location on the support structure supporting the control device; and
wherein the NFC reader/writer of the control device installed at the specific physical location, upon receiving power, reads stored information specific to the control device installed at the specific physical location from the NFC tag attached at or immediately adjacent the specific physical location.

The method of the present invention comprises:
providing a support structure having a specific location for supporting a control device;
attaching a near field communication (NFC) tag on or immediately adjacent the support structure at or immediately adjacent the specific location for supporting the control device;
installing a control device having a NFC reader/writer at the specific location for supporting a control device;
applying power to the control device installed at the specific location; and
reading, from the NFC tag attached at or immediately adjacent the specific location, by the NFC reader/writer of the control device installed at the specific location, stored information related to the control device installed at the specific location.

### BRIEF DESCRIPTION OF THE DRAWINGS

Figures 1A - 1E illustrate a DIN rail installation with NFC tags installed.
Figure 2 illustrates a control center with NFC tags installed.
Figure 3 is a flow chart showing the steps for rapid replacement of control devices using the method of the present invention.

### DETAILED DESCRIPTION OF THE EMBODIMENTS

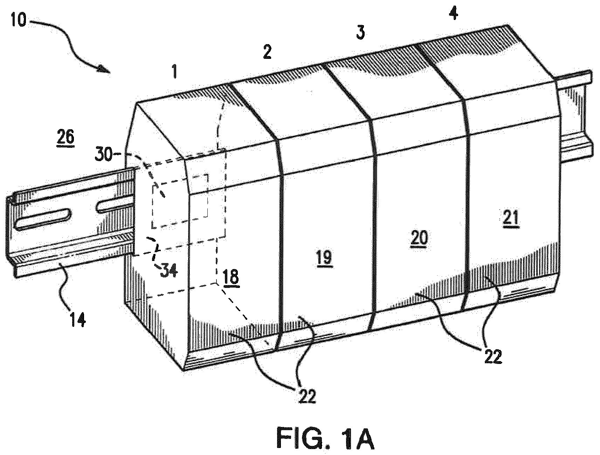

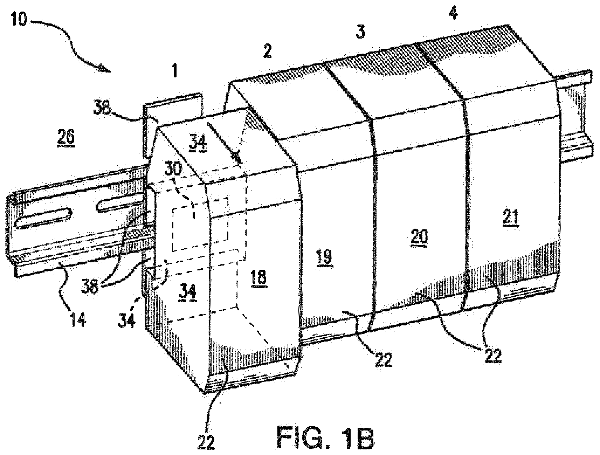

Figures 1A - 1E illustrate a fast device replacement (FDR) system of the present invention, generally indicated by reference numeral **10**, as deployed in a DIN rail **14** mounting application. Several electronic or control devices **18**, **19**, **20** and **21**(collectively indicated by reference numeral **22**) using the FDR system, are installed on the DIN rail **14**. It is to be understood that although the term "control device" will be used hereafter it includes all types of electronic devices that are generally assigned a specific location and are subject to direct replacement. DIN rails **14** are generally installed on vertical surfaces, which for the purpose of this discussion will be indicated by reference numeral **26**, such as the back or side walls of an enclosure or on a wall of an electrical closet, control room. In some applications the DIN rail **14** can be installed directly on a surface **26** of the equipment being controlled by control devices **22** installed on the DIN rail **14**. As can be seen in Figure 1A, a number of control devices **22** have been installed on DIN rail **14**. Indicia placed above the control devices **22** is for the purpose of this discussion, but could be used to easily identify a specific physical location at which individual control devices **22** are located on DIN rail **14**. Each control device **22** of the FDR system **10** includes a near field (NFR) reader/writer **30** and each specific physical location associated with a specific one of the control devices **22** includes a NFC tag **38** (Figure 1B). In this particular embodiment the NFC reader/writer **30** is located on or near a rear surface **34** of each of the control devices **22**.

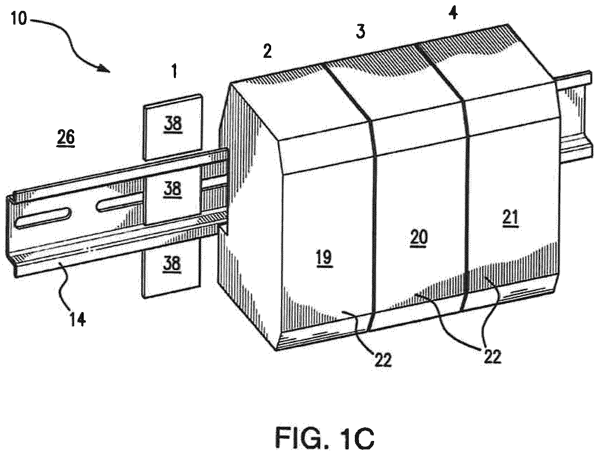

Referring now to Figure 1B, control device **18** associated with indicia 1 is selected to be replaced. After power to the selected control device **18** has been disconnected the control device **18** can be removed from DIN rail **14**. A NFC tag **38** is located either on surface **26** or on DIN rail **14** at a specific physical location associated with control device **18** and indicia 1. The NFC tag **38** located at the specific physical location associated with control device **18** can have recently stored information specific to the selected control device **18** being replaced. In Figure 1C control device **18** has been removed from DIN rail **14** and possible locations for the NFC tag **38** at the specific physical location associated with control device **18** are clearly seen.

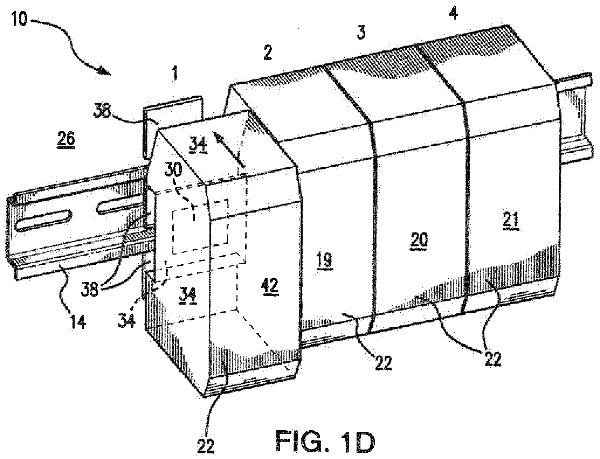

Referring now to Figure 1D, a new exact replacement control device **42** is being installed to replace control device **18** at the specific physical location associated with control device **18** and indicia 1. New control device **42** includes a NFC reader/writer **30** on or near its rear surface **34**.

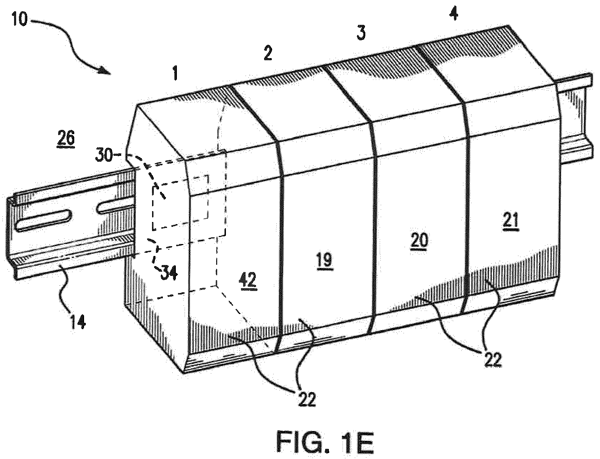

Referring now to Figure 1E, the new control device **42** has been installed at the specific physical location previously associated with control device **18** and indicia 1, and now being occupied by and associated with new replacement control device **42**. When power is reconnected to control device **42** the NFC reader/writer **30** in control device **42** will immediately check for information stored on NFC tag **38** located at the specific physical location at which control device **18** was installed and where new control device **42** is currently installed.

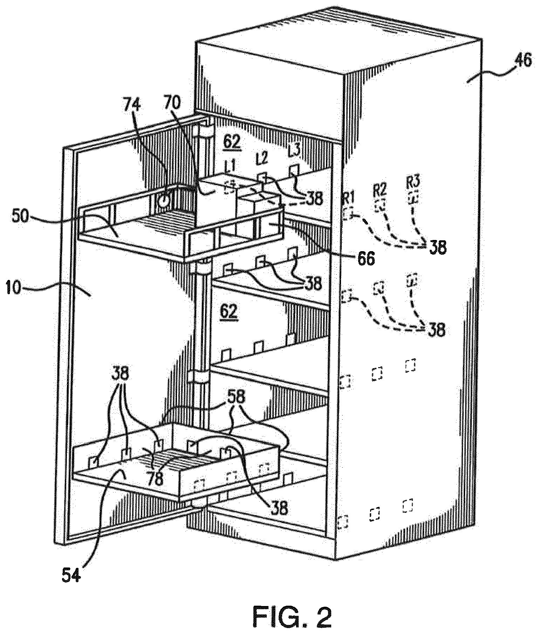

Figure 2 illustrates the fast device replacement (FDR) system **10** of the present invention, as deployed in a motor control center, enclosed electrical housing or cabinet, generally referred hereafter as an enclosure, and indicated by reference numeral **46**. Enclosures **46** are generally provided with racks **50** or trays **54** on which the control devices **22** are assembled. Racks **50** are generally open, frame like structures, while trays **54** are more enclosed structures having side walls **58**. The control devices **22** are assembled on the racks **50** at specific physical locations. When racks **50** are used the NFC tags **38** can be attached to the inside surface **62** of the enclosure **46** walls at specific physical locations such as R₁, R₂, R₃, L₁, L₂ and L₃ which coincide with the specific physical locations of the control devices **66** and **70**. In Fig. 2, a NFC tag **38** is installed on the surface **62** of the enclosure **46** wall at the specific physical position indicated by indicia R3, such that it will coincide with the specific physical location of control device **66** when rack **50** is in its operating position. In some situations the specific physical location of a control device **22** is not such that a NFC tag **38** can be placed immediately adjacent to it. The specific physical position of control device **70** is such that a NFC tag **38** cannot be positioned to coincide with its specific physical position. Therefore, a remote NFC antenna **74** connected to control device **70** is attached to the rack **50** at a specific physical position that coincides with the specific physical position of NFC tag **38** associated with indicia L3 on inside surface **62** of enclosure **46** when rack **50** is in its operating position.

When trays **54** are used the NFC tags **38** can be attached to the insides surfaces **78** of the tray sides **58** at or immediately adjacent the specific physical positions of control devices **22** installed on trays **54** or by using remote NFC antennas **74**.

If the specific physical location of control devices **22** can be accurately determined the NFC tags **38** can be pre-installed on DIN rails **14** and on the inside surfaces **62** of enclosures and inside surfaces **78** of trays **54**. The pre-installed NFC tags **38** can be easily pre-programmed with specific operating parameters and information relative to the particular control device **22** which will be installed at the specific physical location of the particular NFC tag **38**. Using pre-installed pre-programmed NFC tags **38** can reduce commissioning time.

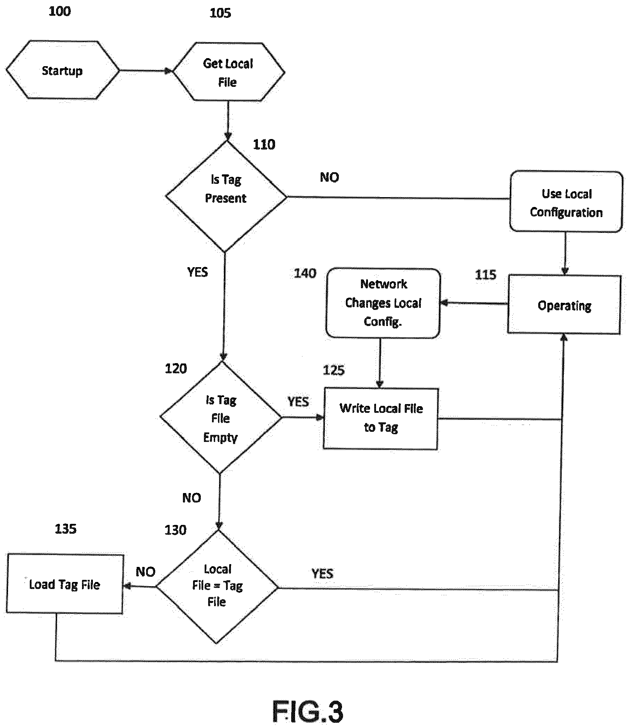

Referring now to the FDR flow chart of Figure 3, a more detailed description of the FDR system interactions between the NFC tag **22** and control device **22** is described. When power is applied to a control device **22** (step 100) installed in a specific physical location the control device **22** downloads general operating parameters from its local memory (step 105). After the local download is complete its NFC reader/writer **30** initiates contact with a NFC tag **38** associated with the specific physical location in which the control device **22** is installed (step 110). If there is no response from a NFC tag **38** at step 110 the local configuration file is used for operating the control device **22** (step 115). If a NFC tag **38** does respond at step 110 the NFC reader/writer **30** checks to see if there is a configuration file present on the NFC tag **38** (step 120). If the NFC tag **38** does not have a configuration file at step 120 the NFC reader/writer **30** writes the local configuration file to the NFC tag **38** (step 125) and uses the local configuration file for operation of the control device **22** (step 115). If the NFC tag **38** does have a configuration file the NFC tag **38** configuration file is compared to the local configuration file (step130). If the local configuration file is equal to the NFC tag **38** configuration file at step 130 the local configuration file is used for operation of the control device **22** (step 115). If the local configuration file is not equal to the NFC tag **38** configuration file at step 130 the NFC tag **38** configuration file is downloaded (step 135) and used for operating the control device **22** (step 115). During operation of the control device **22**, if there is a configuration change to the local file from the network (step 140) the NFC reader/writer **30** writes the changed local file to the NFC tag **38** (step 125) and uses the changed local file for operating the control device **22** (step 115). The local file and NFC tag **38** file are synchronized each time a change is made to the local file, prior to any planned interruption of operation of the control device **22** and at predetermined intervals. This synchronization ensures that the NFC tag **38** file is current with the local file should any unexpected interruptions occur and if a fast replacement of the control device **22** is required.

## Claims

**1.** A system for fast device replacement, comprising:
a control device having a near field communication (NFC) reader/writer;
a support structure for supporting the control device at a specific physical location on the support structure; and
a NFC tag attached to the support structure or immediately adjacent the support structure at or immediately adjacent the specific physical location on the support structure supporting the control device; and
wherein the NFC reader/writer of the control device installed at the specific physical location, upon receiving power, reads stored information related to the control device installed at the specific physical location from the NFC tag attached at or immediately adjacent the specific physical location.

**2.** The system for fast device replacement of claim 1, wherein the support structure can be a control rack, a DIN rail, an enclosure wall or an equipment surface.

**3.** The system for fast device replacement of claim 1, wherein the NFC reader/writer of the control device installed at the specific physical location, upon receiving a network change to stored information specific to the control device installed at the specific location, writes the new information to the NFC tag attached at or immediately adjacent the specific physical location.

**4.** The system for fast device replacement of claim 1, wherein the NFC reader/writer of the control device installed at the specific physical location, upon receiving a notice of a planned interruption of operation, writes its current information specific to the control device installed at the specific location to the NFC tag attached at or immediately adjacent the specific physical location.

**5.** The system for fast device replacement of claim 1, wherein the NFC reader/writer of the control device installed at the specific physical location, at predetermined intervals, synchronizes its current information specific to the control device installed at the specific location with the NFC tag attached at or immediately adjacent the specific physical location.

**6.** The system for fast device replacement of claim 1, wherein a pre-installed pre-programmed NFC tag can be used to commission a new control device being installed at the specific physical location on the support structure.

**8.** A method for fast device replacement, comprising:
providing a support structure having a specific location for supporting a control device;
attaching a near field communication (NFC) tag on or immediately adjacent the support structure at or immediately adjacent the specific location for supporting the control device;
installing a control device having a NFC reader/writer at the specific location for supporting a control device;
applying power to the control device installed at the specific location; and
reading, from the NFC tag attached at or immediately adjacent the specific location, by the NFC reader/writer of the control device installed at the specific location, stored information related to the control device installed at the specific location.

**9.** The method of claim 10, wherein the NFC reader/writer writes information related to the control device installed at the specific physical location to the NFC tag attached at or immediately adjacent the specific physical location.
